# EUROPEAN PATENT SPECIFICATION

(11) **EP 0 524 021 B1**
(45) Date of publication and mention of the grant of the patent: **24.09.1997**
(21) Application number: 92306597.3
(22) Date of filing: 17.07.1992
(51) Int. Cl.: G01N 31/22

(54) **Oxygen indicator**
Sauerstoffindikator
Indicateur d'oxygène

(30) Priority: 17.07.1991 JP 202484/91
(43) Date of publication of application: 20.01.1993
(73) Proprietor: MITSUBISHI GAS CHEMICAL COMPANY, INC., Chiyoda-ku, Tokyo (JP)
(72) Inventor: Inoue, Yoshiaki, Tokyo (JP); Hatakeyama, Hidetoshi, Tokyo (JP); Yoshino, Isamu, Tokyo (JP)
(74) Representative: Smaggasgale, Gillian Helen

(56) References cited:
- US-A- 4 169 811
- US-A- 4 349 509
- PATENT ABSTRACTS OF JAPAN vol. 10, no. 341 (P-517) 18 November 1986; & JP-A-61 144 568
- DATABASE WPI Week 8836, Derwent Publications Ltd., London, GB; AN 88-254 903; & JP-A-63 187 154

## Description

The present invention relates to an oxygen indicator indicating the presence or absence of oxygen in a gaseous atmosphere for maintaining foodstuffs, electronic parts, electrical products having electronic parts, metallic parts or products having metallic parts.

The term "oxygen indicator" means an oxygen indicator composition, a tablet comprising an oxygen indicator composition and film or sheet on which an oxygen indicator composition is coated. The presence or substantial absence of oxygen in the gaseous atmosphere surrounding the indicator is indicated by a reversible color change of the indicator.

US Patent Nos. 4,169,811 and 4,349,509 disclose an oxygen indicator containing a reducing agent glucose. However, water or moisture is necessary for these indicators to function. When these indicators are used under anhydrous conditions, the indicator does not function sufficiently.

Even when water is previously added to the oxygen indicator in order to avoid the inconvenience, the moisture is absorbed in a desiccant or a dried foodstuff, whereby the function of the indicator is reduced. In addition, the water in the indicator moistens the dried foodstuffs.

Japanese Patent Publication (Kokai) Nos. 61-144568 and 62-12853 disclose an oxygen indicator comprising a thiazine dyestuff and an organic acid salt of ethanol amine as essential components in order to overcome the above mentioned shortcoming. However, when the oxygen indicator is exposed to light, there is a possibility that the indicator will show the color that indicates the absence of oxygen in spite of the presence of small amounts of oxygen.

In other words, known oxygen indicators do not function sufficiently in the absence of moisture or under the presence of light.

The oxygen indicator of the present invention overcomes the above mentioned shortcoming.

An object of the present invention is to provide an oxygen indicator which functions under anhydrous state or even when irradiated with light.

This invention relates to an oxygen indicator comprising
(a) at least one organic compound having 3 or more carbon atoms and containing at least one primary amine group and at least one hydroxy group, and
(b) at least one dyestuff selected from the group consisting of thiazine dyestuffs, indigo dyestuffs and mixtures thereof.

The indicator may further contain an organic acid or an inorganic acid. The organic compound and the organic acid or the inorganic acid may be chemically bonded to each other.

The organic compound (sometimes hereinunder referred to as main component) having 3 or more carbon atoms and containing at least one primary amine group and at least one hydroxy group changes the color of the dyestuff in the absence of oxygen. The primary amine group and the hydroxy group in the organic compound are functional groups that act to change the color of the dyestuff in the presence of oxygen. The function of these groups is not affected by other groups which may be present in the organic compound. All of the organic compounds having 3 or more carbon atoms, a primary amine group and a hydroxy group can be used in the present invention. Oligomeric or polymeric compounds can also be used. However, organic compounds having a lower molecular weight are preferable.

Since compounds having 1 or 2 carbon atoms are volatile, they are likely to vaporise during the storage of any indicator containing such a compound, whereby the function of the indicator is lowered. The compounds are also odorous. It has been proposed to use a compound having 1 or 2 carbon atoms with an organic acid or an inorganic acid in order to lower its volatility. However, an oxygen indicator containing an organic compound having 1 or 2 carbon atoms and an organic acid or an inorganic acid is unstable. Such an indicator is therefore practically inconvenient.

The organic compounds in which a carbon atom having the primary amine group is adjacent to a carbon atom having the hydroxy group are preferable.

Examples of the organic compounds having 3 or more carbon atoms and containing at least one primary amine group and at least one hydroxy group include 3-amino-1,2-propanediol, 3-amino-1-propanol, 3-amino-2-propanol, 4-4-amino-1-butanol, 5-amino-1-pentanol, 5-amino-4-pentanol. 5-amino-1-pentanol, 6-amino-5-hexanol, 6-amino-1-hexanol, glucosamine, aminophenol, aminonaphthol, and 4-amino-1,2-butanediol. Of these organic compounds, 3-amino-1,2-propanediol, 3-amino-2-propanol, 4-amino-3-butanol, 5-amino-4-pentanol, 6-amino-5-hexanol, glucosamine, aminophenol, aminonaphthol and 3-amino-1,2-butanediol are preferable.

The organic compound may be used with at least one organic or inorganic acid. The organic compound and the organic or inorganic acid may be an admixture, or may be chemically bonded to each other. For example, the organic compound and the acid may form a salt or an addition product. These salts and addition products are neither volatile nor odorous. Examples of the inorganic acids include sulfuric acid, hydrochloric acid, nitric acid. phosphoric acid, silicic acid and the like. Examples of the organic acids include aliphatic acids and sulfonic acids.

The dyestuffs make the reversible color change between the presence of oxygen and the substantial absence of oxygen in the presence of an electron donor. That is, the dyestuffs become colorless or change color in the substantial absence of oxygen. The dyestuffs include thiazine dyestuffs and indigo dyestuffs.

Thiazine dyestuffs are represented by the formula 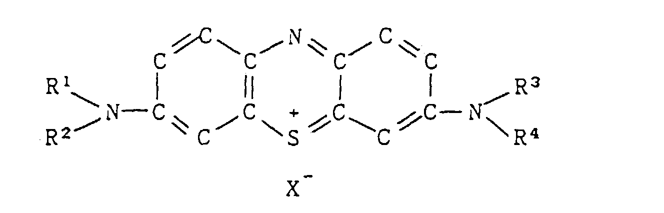 wherein
R¹ - R⁴ are independently alkyl or hydrogen and
X is halogen.

Indigo dyestuffs are represented by the formula 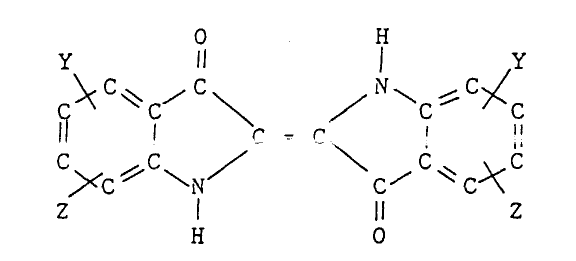 wherein
Y is independently H, Br or SO₃Na and
Z is independently H, Br or SO₃Na.

Examples of the thiazine dyestuffs include Lauth's Violet, Azure B, Azure C, Methylene Blue, and Thionine Blue having thiazine ring as well as Neomethylene Blue and Brilliant Alizarine Blue in which -OH group and/or -SO₃H is present on the nuclear carbon.

Examples of the indigo dyestuffs include Indigo, Indigo Carmine, Bromo Indigo R and the like.

Acid Red is an example of a suitable dyestuff.

A dyestuff which does not cause a color change in the presence or absence of oxygen may be used with the thiazine or indigo dyestuff in order to give rise to a clearer color change.

The form of the oxygen indicator is not critical in the present invention. Since the oxygen indicator is commonly placed with an oxygen scavenger and an object product to be stored in a hermetic system, it is preferable for the oxygen indictor to be in the form of a tablet or to be printed on a substrate such as paper, non-woven fabric sheet or film.

When the oxygen indicator is in the form of a tablet, an inorganic filler, such as silicate or a polymer, may be included to ensure the strength of the tablet. Stearic acid salts which act as a lubricant may also be included. The organic compound and the stearic acid may be supported by the filler. The tablet comprising the main component and the other components may be prepared by conventional molding methods.

When the oxygen indicator is printed on a substrate, a binder, such as ethyl cellulose, polyvinyl alcohol or starch and a pigment, such as calcium carbonate, titanium oxide or barium sulfate may be added to the printing composition in order to ensure the adhesion between the main component/the dyestuff and the substrate. The main component and the dyestuff may be added to water or an organic solvent, and the resulting liquid material coated on a film or sheet and dried to obtain the oxygen indicator. A polyhydric alcohol, such as glycerine or polyethylene glycol may also be added to control the viscosity of the coating material.

The oxygen indicator composition may be printed on a non-packaging substrate. Alternatively the oxygen indictor composition may be printed on a package for an oxygen scavenger, or a packaging material or a package container for packing an object material to be stored.

When the oxygen indicator composition is printed on a package bag or container, it is preferably printed on the inside of an oxygen barrier transparent film having an oxygen barrier property of not more than 1000 mℓ/m².Atm.day, followed by laminating a film having an oxygen barrier property of not less than 1000 m /m².Atm.day on to the indicator layer.

The oxygen indicator of the present invention may be packed in a bag formed of an oxygen permeable film of not less than 1000 mℓ/m².Atm.day. Examples of the oxygen permeable films include perforated or non-perforated polyethylene, silicone resin, polypropylene, vinyl acetateethylene copolymer or polypropylene. The package containing the oxygen indicator may be packed in another bag with an object material to be stored. In this case, direct contact between the oxygen indicator and the object material to be stored can be avoided, so the object material is not contaminated. When the oxygen indicator is packed in an oxygen permeable bag, the oxygen diffusion rate can be adjusted, whereby the color change rate of the oxygen indicator can be adjusted.

Films having an oxygen barrier property include a polyvinylidene chloride-coated film and films deposited with silicon oxide.

The present invention is further illustrated by the following non-limiting examples. The percentages and parts are by weight, unless otherwise specified.

### Examples 1 - 25 (Preparation of oxygen indicator composition)

The components given in Table 1 are added to ethyl alcohol or toluene, followed by agitating the mixture by high speed homomixer to allow the components to be dissolved or be dispersed in the solvent, thereby obtaining the oxygen indicator compositions in which the components are uniformly dispersed in the solvent.

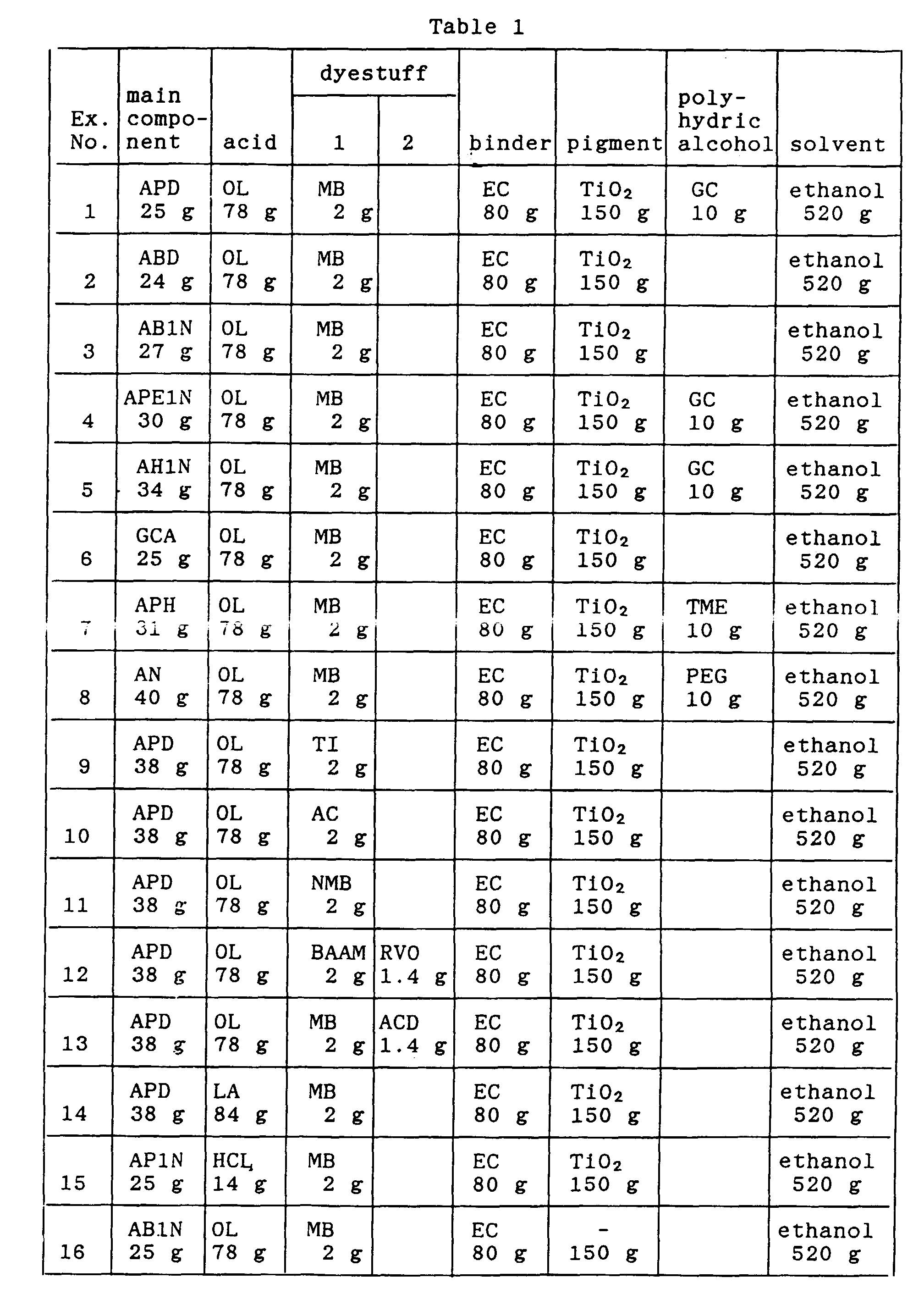

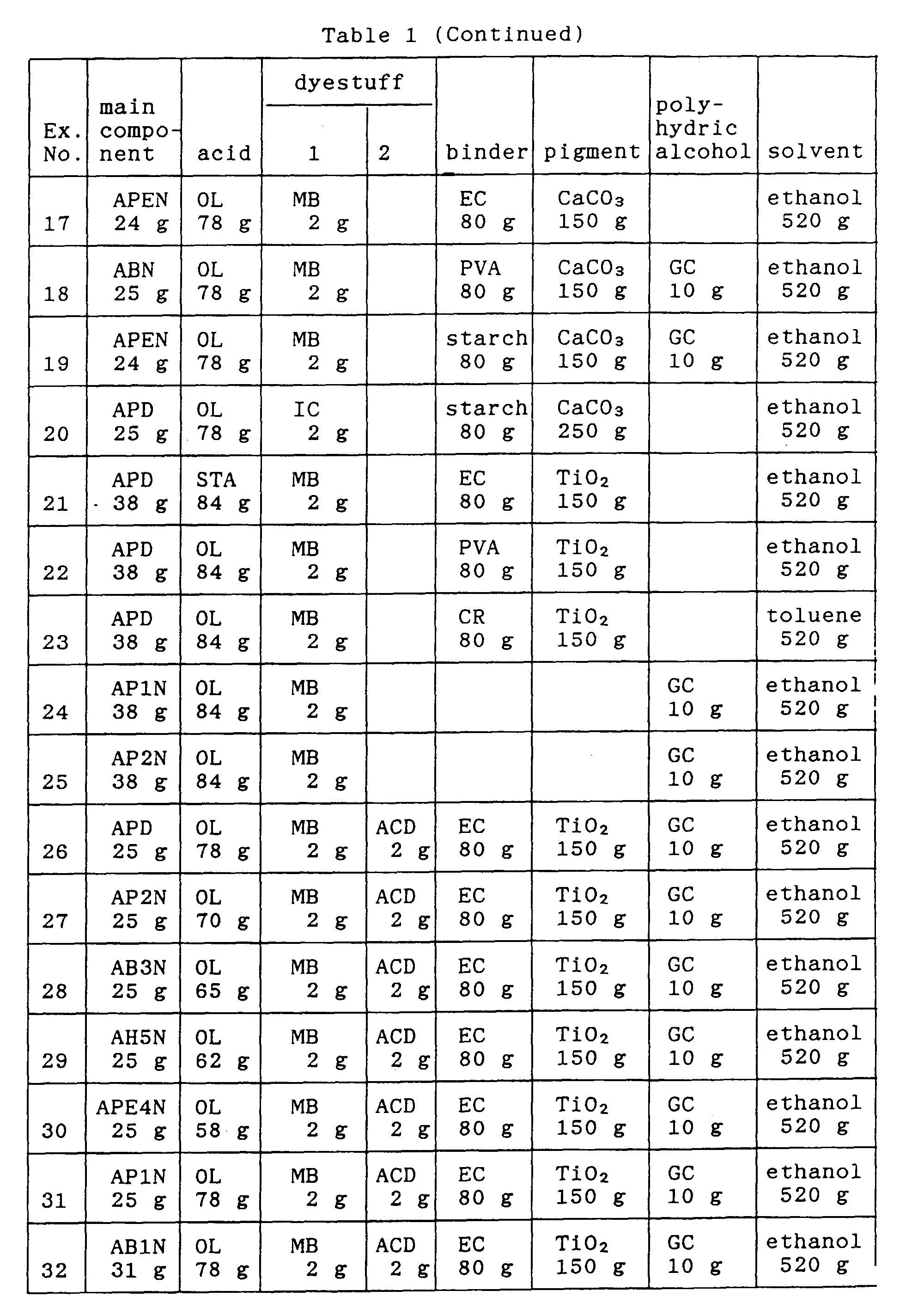

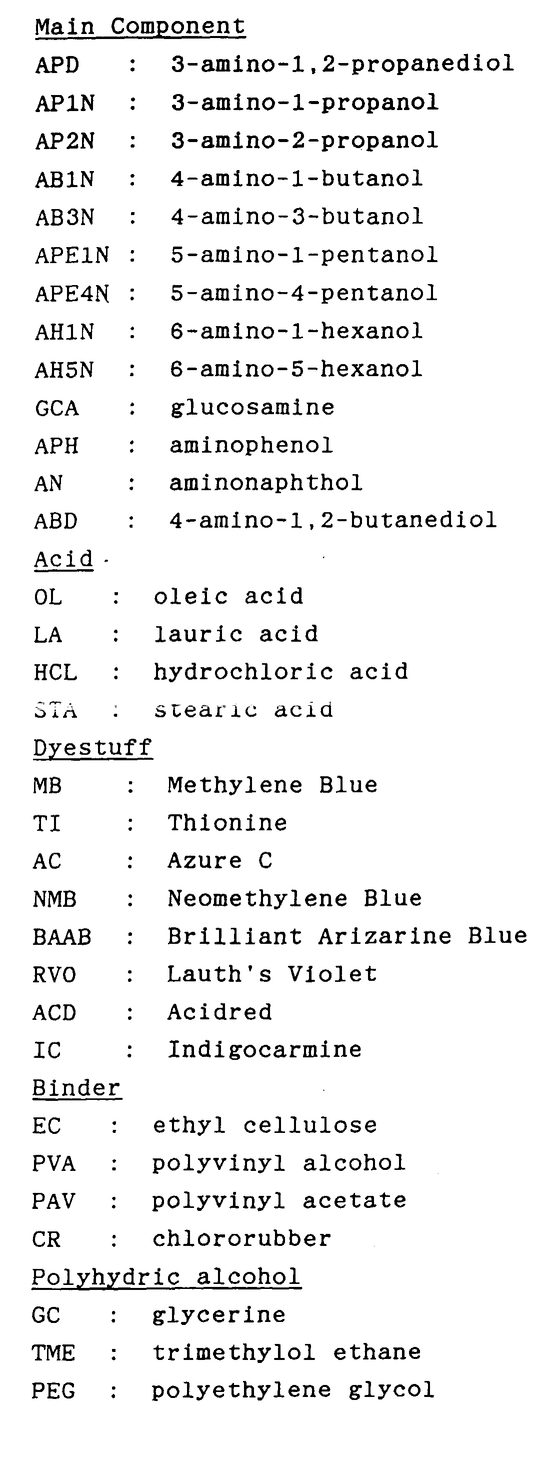

### Examples 33 - 66

### (Printing oxygen indicator composition to substrate)

The indicator compositions prepared in Examples 1 - 25 were coated on the substrates shown in Table 2 by means of a Meyer bar, and dried at 100°C for 45 seconds under hot air.

**Table 2**

| Ex. | Examples of indicator | substrate | coating amount g/m² |
|---|---|---|---|
| 33 | 1 | neutral paper | 5 |
| 34 | 1 | film | 3 |
| 35 | 1 | non-woven fabric | 3 |
| 36 | 2 | neutral paper | 6 |
| 37 | 3 | neutral paper | 5 |
| 38 | 4 | neutral paper | 3 |
| 39 | 5 | neutral paper | 6 |
| 40 | 6 | neutral paper | 6 |
| 41 | 7 | neutral paper | 5 |
| 42 | 8 | neutral paper | 3 |
| 43 | 9 | neutral paper | 6 |
| 44 | 10 | neutral paper | 6 |
| 45 | 11 | neutral paper | 5 |
| 46 | 12 | neutral paper | 3 |
| 47 | 13 | neutral paper | 6 |
| 48 | 14 | neutral paper | 6 |
| 49 | 15 | neutral paper | 5 |
| 50 | 16 | neutral paper | 3 |
| 51 | 17 | neutral paper | 6 |
| 52 | 18 | neutral paper | 3 |
| 53 | 19 | neutral paper | 6 |
| 54 | 20 | neutral paper | 3 |
| 55 | 21 | neutral paper | 5 |
| 56 | 22 | neutral paper | 5 |
| 57 | 23 | neutral paper | 5 |
| 58 | 24 | neutral paper | 5 |
| 59 | 25 | neutral paper | 5 |
| 60 | 26 | neutral paper | 5 |
| 61 | 27 | neutral paper | 5 |
| 62 | 28 | neutral paper | 5 |
| 63 | 29 | neutral paper | 5 |
| 64 | 30 | neutral paper | 5 |
| 65 | 31 | neutral paper | 5 |
| 66 | 32 | neutral paper | 5 |

### Examples 67 - 93

### (Function of oxygen indicator)

Each of the oxygen indicators prepared in Examples 33 - 59 was sealed with an oxygen scavenger and air (250 mℓ) in KON/PE bag (150 mm × 200 mm). The bags were maintained at 25°C at a distance of 1 meter from 40 W fluorescent tube. The oxygen concentration and humidity in the system and change of color of oxygen indicator with time are shown in Table 3.

The oxygen scavenger was prepared by a process which comprises impregnating a mixture of iron linoleate (0.5 g) and soybean oil (3 g) into particulate activated carbon (10 g), and packing the resulting particles and silicagel A type (15 g) by a bag (60 × 90 mm) formed of paper/perforated polyethylene.

### Control Run 1

Glucose (5 g), Methylene Blue (MB) (0.2 g) and Acid Red (ACD) (0.2 g) were added to a 50% aqueous solution of ethanol (45 g) in the order of description. The mixture was agitated by high speed agitator to obtain a uniform solution. Mg(OH)₂ (35 g) and magnesium stearate (8 g) were added to the solution in the order of description. The resulting mixture was uniformly agitated. The mixture was dried at 80°C for 35 minutes to obtain particles. The resulting particles were placed in a cavity having a diameter of 7 mm and a depth of 10 mm and pressed under a load of 300 Kg to obtain a tablet having a thickness of 4 mm. The function of the resulting tablet as an oxygen indicator was tested as in Examples 53 - 79. The results are shown in Table 3.

### Control Run 2

The procedure of Example 26 was repeated except that triethanol amine was used instead of 3-amino-1,2-propanediol employed in Example 53, thereby preparing an oxygen indicator. The resulting oxygen indicator was tested as in Example 53. The results are shown in Table 3.

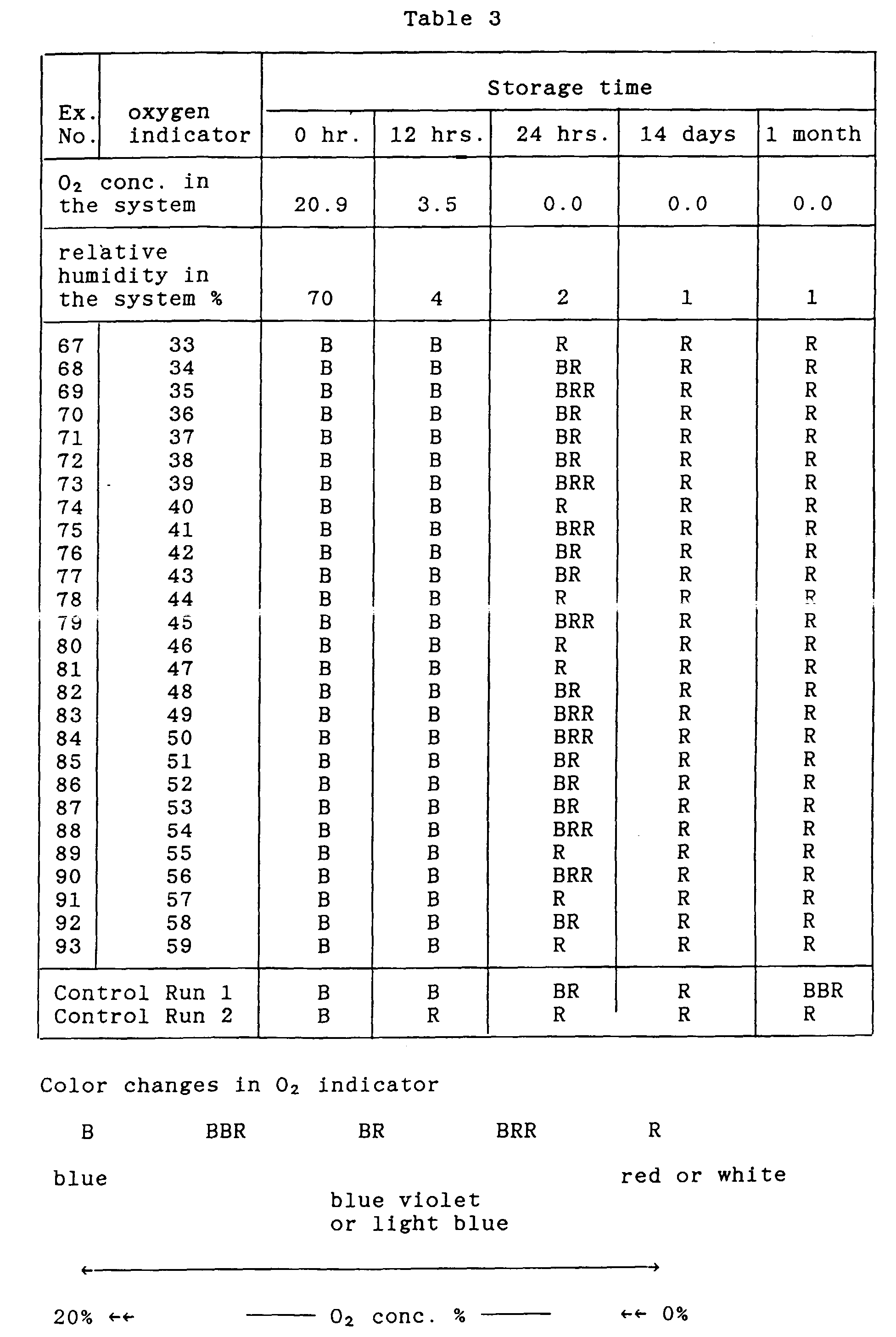

When the oxygen indicator of the present invention was maintained for 24 hours or more under anhydrous state, while being irradiated with a light and in the absence of oxygen, the color of the indicator showed BR, BRR or R meaning the absence of oxygen. Even when the indicator was maintained under the above conditions for one month, the color of the indicator showed "R".

On the other hand, the indicator of Control Run 1 changed to BR or R expressing the absence of oxygen. However, when the indicator was maintained under dried state for one month, the indicator returned BBR expressing the presence of oxygen in spite of the absence of oxygen.

The indicator of Control Run 2 showed R expressing the absence of oxygen under the presence of light in spite of the presence of oxygen in a concentration of 3.5%.

### Examples 94 - 100 (Function of oxygen indicator)

The oxygen indicators prepared in Examples 61 - 66 were cut to a size 20 mm × 20 mm. Each of the oxygen indicators were sealed in the bag (150 mm × 200 mm) formed of silicon oxide-deposited film with an oxygen scavenger and air (250 mℓ). The bag was adhered to a window glass which was irradiated to sun light and was maintained at 25°C. The oxygen concentration and humidity in the system and the color change of the indicator with time are shown in Table 5.

The oxygen scanvenger was prepared by a process which comprises impregnating a mixture of iron linoleate (0.5 g) and soybean oil (3 g) into particulate activated carbon (10 g), and packing the resulting particles and quick lime (15 g) by a bag (60 × 90 mm) formed of paper/perforated polyethylene.

### Control Run 3

Glucose (5 g), Methylene Blue (MB) (0.2 g) and Acid Red (ACD) (0.2 g) were added to a 50% aqueous solution of ethanol (45 g) in the order of description. The mixture was agitated by high speed agitator to obtain a uniform solution. Mg(OH)₂ (35 g) and magnesium stearate (8 g) were added to the solution in the order of description. The resulting mixture was uniformly agitated. The mixture was dried at 80°C for 35 minutes to obtain particles. The resulting particles were placed in a cavity having a diameter of 7 mm and a depth of 10 mm and pressed under a load of 300 Kg to obtain tablets having a thickness of 4 mm. The function of the resulting tablet as an oxygen indicator was tested as in Examples 94 - 100. The results are shown in Table 4.

### Control Run 4

The procedure of Example 27 was repeated except that triethanol amine was used instead of 3-amino-1,2-propanediol employed in Example 43, thereby preparing an oxygen indicator. The resulting oxygen indicator was tested as in Examples 94 - 100. The results are shown in Table 4.

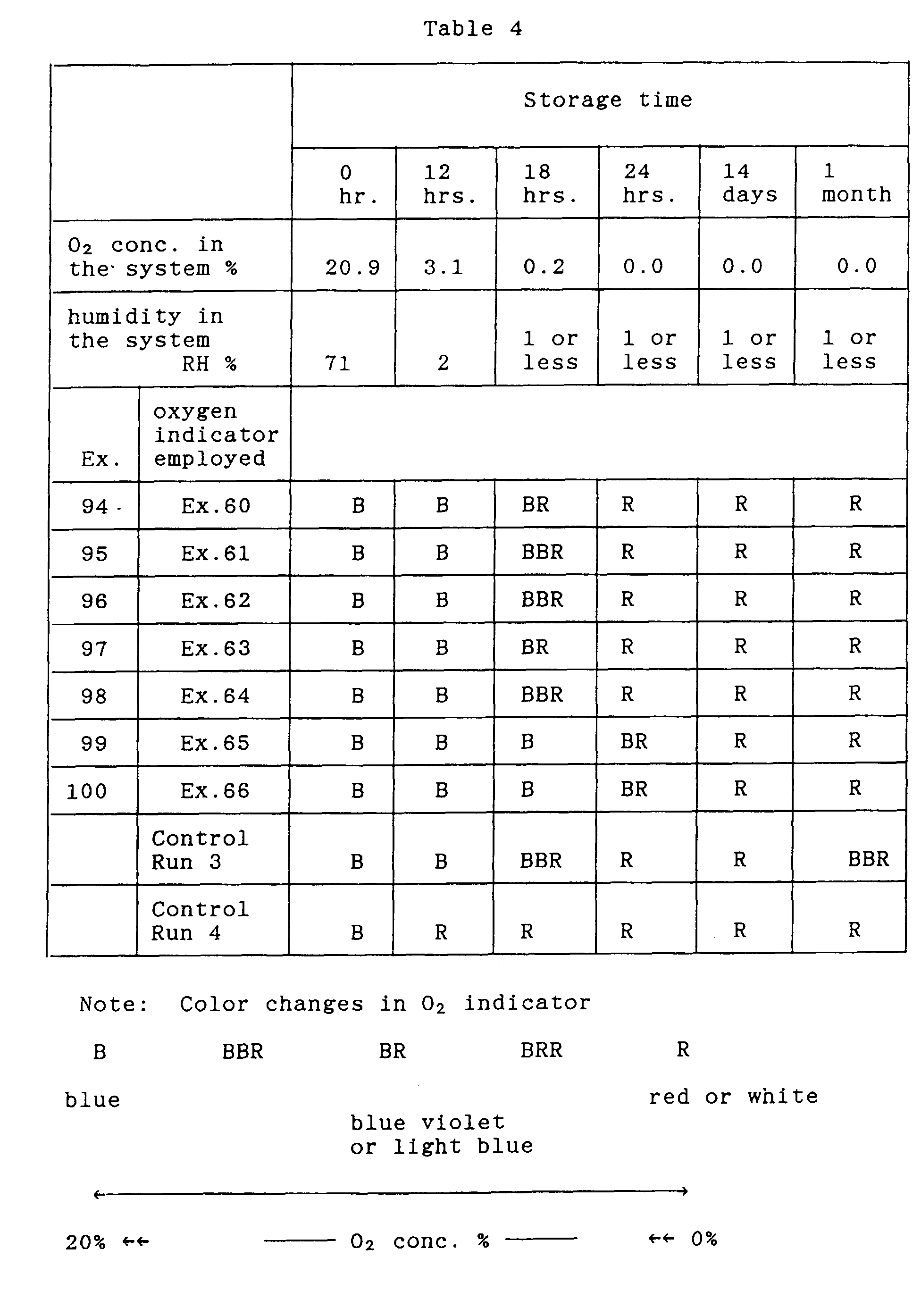

### Example 101

The oxygen indicator composition of Example 1 was printed in a 5 mm circle in a coating amount of 3 g/m² on the non-coated surface of a polyvinylidene (2 µm thick) coated oriented nylon film 15 µm thick by means of gravure printing and dried at 100°C for 45 seconds. A 5% isocyanate adhesive dissolved in ethyl acetate was coated in a coating amount of 3 g/m² on the printing surface of the oxygen indicator composition-printed film and thermal-treated at 95°C for 24 hours; and then polyethylene film 55 micron meter thick was laminated on the adhesive layer.

The bag (150 × 200 mm) was prepared from the resulting film. The function of the indicator was tested as in Example 67. The results are shown in Table 5.

**Table 5**

| Ex. 101 | 0 hr. | 12 hrs. | 24 hrs. | 14 days | 1 month |
|---|---|---|---|---|---|
| O₂ conc. in the system % | 20.9 | 3.5 | 0.0 | 0.0 | 0.0 |
| relative humidity in the system % | 70 | 4 | 2 | 1 | 1 |
| color of indicator | B | B | BRR | R | R |

The O₂ indicator experienced color changes at a slightly slower speed than the indicator of Example 67 but not so slowly as to cause a problem in practice.

### Example 102

3-Amino-1,2-propanediol (APD) (2 g), oleic acid (OL) (8 g), Methylene Blue (MB) (0.2 g) and glycerine (GC) (8 g) were added to ethanol (52 g) in the order of description. The mixture was agitated by high speed agitator to obtain a uniform solution. Silicon oxide (white filler) (500 g) and magnesium stearate (8 g) were mixed with the mixture. The resulting oxygen indicator particles were placed into a cavity having a diameter of 7 mm and a depth of 10 mm and pressed under a load of 300 Kg to obtain tablets having a thickness of 4 mm. The function of the resulting oxygen indicator tablet was tested as in Example 47. The function of the tablet was the same as that of the indicator prepared in Example 67.

### Examples 103 - 105

The oxygen indicator prepared in Example 47 was cut to a size 20 mm × 20 mm. The oxygen indicator was adhered on the inside of the bag (250 mm × 300 mm) formed of polyvinylidene chloride-coated oriented nylon composite film; and an oxygen scavenger, desiccant and air 250 mℓ were placed in the bag; and the bag was sealed. The resulting bag was maintained at 25°C at places which are irradiated at different intensity of light. The oxygen concentration and humidity in the system and the color change of the indicator are shown in Table 6.

The oxygen scavenger was the same as that used in Example 67. The desiccant was the one obtained by packing silica gel (A type) (20 g) in a perforated polythene package (75 mm × 100 mm).

### Control Runs 5 - 7

The procedures of Examples 103 - 105 were repeated except that the oxygen indicator of Control Run 1 was used. The results are shown in Table 6.

### Control Runs 8 - 10

The procedures of Examples 103 - 105 were repeated except that the oxygen indicator of Control Run 2 was used. The results are shown in Table 6.

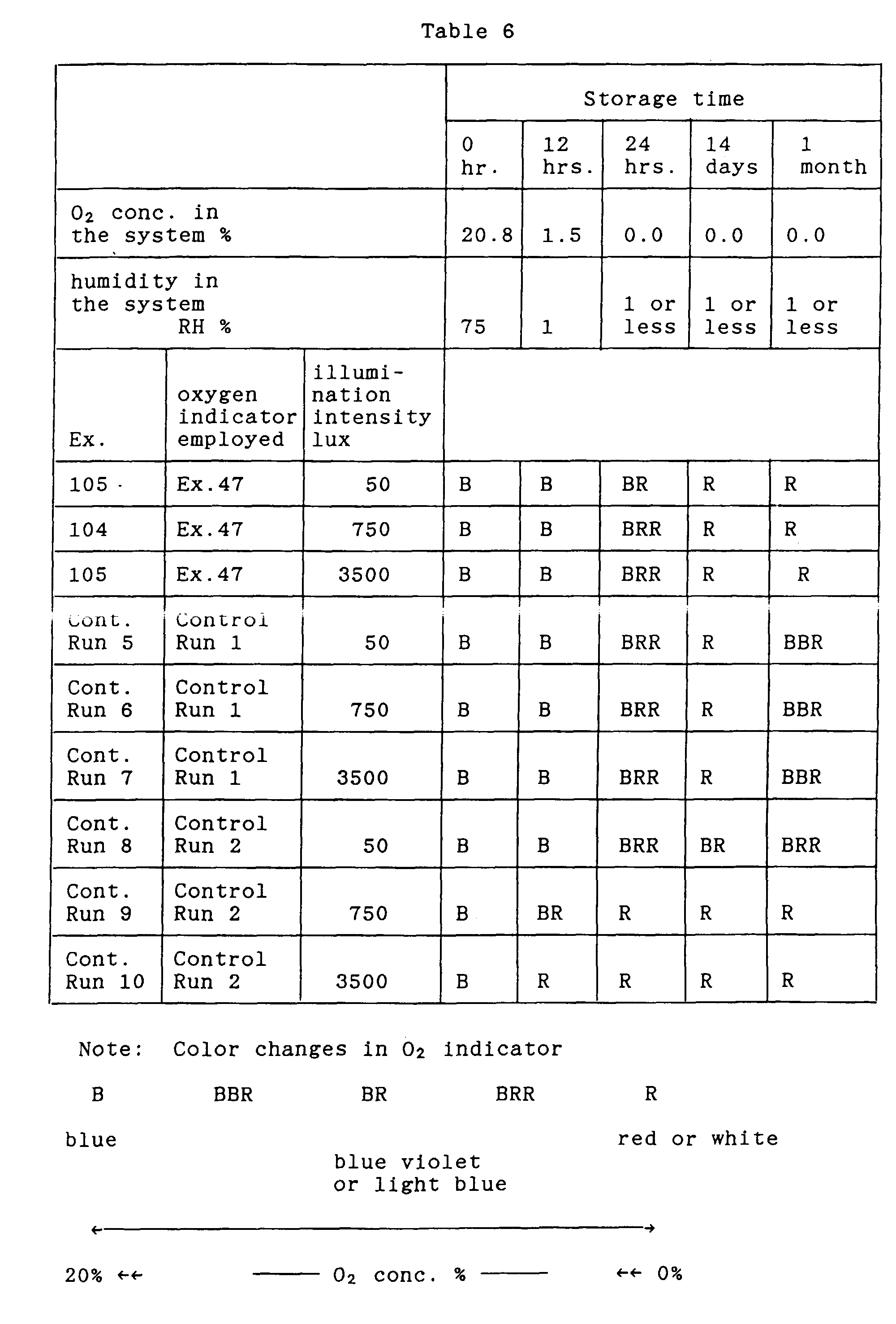

When the oxygen indicator of the present invention was maintained for 24 hours - one month in the absence of oxygen, the indicator showed BR, BRR or R expressing the absence of oxygen under 50 - 3500 lux.

The oxygen indicator of Control Run 1 did not cause the color to change depending on the intensity of light. However, when the oxygen indicator of Control Run 1 was maintained for one month under anhydrous state and while being irradiated with a light, the indicator showed BBR one month later expressing the presence of oxygen. The oxygen indicator of Control Run 2 was slow in color change under limited illumination (BBR at O₂ concentration of 1.5% after 24 hr); in contrast, it was sensitive under ample illumination and, at the same O₂ concentration of 1.5%, it turned to BR under exposure to 750 lux and R under exposure to 3500 lux.

### Example 106

The oxygen indicator prepared in Example 47 was cut to a size of 15 mm × 15 mm. The oxygen indicator was packed in a bag (35 mm × 35 mm) formed of polyethylene film having a thickness of 30 µm and an oxygen permeability of 3500 mℓ/m²-Atm-day. The package was sealed with an oxygen scavenger, a desiccant and air (250 mℓ) in a bag (250 mm × 300 mm) formed of a polyvinylidene chloride-coated, oriented nylon film. The resulting sample was maintained at 25°C. The oxygen concentration and humidity in the system and the color of the oxygen indicator are shown in Table 7. The oxygen scavenger employed was the same as that of Example 67. The result are shown in Table 7.

**Table 7**

| | storage time | | | | |
|---|---|---|---|---|---|
| Ex. 106 | 0 hr. | 12 hrs. | 24 hrs. | 14 days | 1 month |
| O₂ conc. in the system % | 20.9 | 3.5 | 0.0 | 0.0 | 0.0 |
| relative humidity in the system % | 70 | 4 | 2 | 1 | 1 |
| color of indicator | B | B | BRR | R | R |

The color-changing rate of the oxygen indicator of Example 85 is somewhat later than that of the oxygen indicator of Example 67. However, the rate is still acceptable.

The oxygen indicator of the present invention functions stably even under anhydrous conditions, and is not affected by irradiation of light.

The oxygen indicator of the present invention can be printed on paper, tapes and sheets, and can be used in the form of a tablet. Thus, it can be used in a wide variety of modes in practical applications.

The oxygen indicator of the present invention is particularly useful for maintaining articles in the absence of oxygen and its commercial value will be exhibited to the fullest under an anhydrous state and/or under irradiation of light.

Therefore, the oxygen indicator of the present invention is useful for storing metallic materials or semi-conductors which must be maintained in a dry state and for preventing rusting of metallic material. The oxygen indicator is useful for storing metallic materials while being irradiated with light, for example, for storing metallic materials in a show case.

## Claims

1. An oxygen indicator comprising
(a) at least one organic compound having 3 or more carbon atoms and containing at least one primary amine group and at least one hydroxy group, and
(b) at least one dyestuff selected from the group consisting of thiazine dyestuffs, indigo dyestuffs and mixtures thereof.

2. The indicator of Claim 1 wherein the indicator further contains at least one organic or inorganic acid.

3. The indicator of Claim 2 wherein the organic compound and the organic acid or the inorganic acid are chemically bonded to each other.

4. The indicator of any one of Claims 1 to 3 wherein the indicator is printed on a substrate.

5. The indicator of any one of Claims 1 to 3 wherein the indicator is in the form of tablet.

6. The indicator of any one of Claims 1 to 5 wherein the compound (a) is selected from the group consisting of 3-amino-1,2-propanediol, 3-amino-1-propanol, 3-amino-2-propanol, 4-amino-3-butanol, 4-amino-1-butanol, 5-amino-4-pentanol, 5-amino-1-pentanol, 6-amino-5-hexanol, 6-amino-1-hexanol, glucosamine, aminophenol, aminonaphthol, and 4-amino-1,2-butanediol.

7. The indicator of any one of Claims 1 to 5 wherein the compound (a) is the compound in which a carbon atom having the primary amine is adjacent to a carbon atom having the hydroxy group.

8. The indicator of claim 7 wherein the compound (a) is selected from the group consisting of 3-amino-1,2-propanediol, 3-amino-2-propanol, 4-amino-3-butanol, 5-amino-4-pentanol, 6-amino-5-hexanol, glucosamine, aminophenol, aminonaphthol and 3-amino-1,2-butanediol.

9. The indicator of any one of Claims 1 to 8 wherein the dyestuff is selected from the group consisting of Lauth's Violet, Azure B, Azure C, methylene Blue, Thionine Blue, Neomethylene Blue, Brilliant Alizarine Blue, Indigo, Indigocarmine, Bromo Indigo R and Acid Red.

## Patentansprüche

1. Sauerstoffindikator, umfassend
(a) mindestens eine organische Verbindung mit 3 oder mehr Kohlenstoffatomen sowie mindestens einer primären Amingruppe und mindestens einer Hydroxygruppe und
(b) mindestens einen Farbstoff, ausgewählt aus der Gruppe Thiazinfarbstoffe, Indigofarbstoffe und Mischungen hiervon.

2. Indikator nach Anspruch 1, welcher zusätzlich mindestens eine organische oder anorganische Säure enthält.

3. Indikator nach Anspruch 2, wobei die organische Verbindung und die organische Säure oder die anorganische Säure chemisch aneinander gebunden sind.

4. Indikator nach einem der Ansprüche 1 bis 3, aufgedruckt auf ein Substrat.

5. Indikator nach einem der Ansprüche 1 bis 3 in Tablettenform.

6. Indikator nach einem der Ansprüche 1 bis 5, wobei die Verbindung (a) aus der Gruppe 3-Amino-1,2-propandiol, 3-Amino-1-propanol, 3-Amino-2-propanol, 4-Amino-3-butanol, 4-Amino-1-butanol, 5-Amino-4-pentanol, 5-Amino-1-pentanol, 6-Amino-5-hexanol, 6-Amino-1-hexanol, Glucosamin, Aminophenol, Aminonaphthol und 4-Amino-1,2-butandiol ausgewählt ist.

7. Indikator nach einem der Ansprüche 1 bis 5, wobei die Verbindung (a) aus einer Verbindung besteht, bei welcher ein Kohlenstoffatom mit dem primären Amin einem Kohlenstoffatom mit der Hydroxygruppe benachbart ist.

8. Indikator nach Anspruch 7, wobei die Verbindung (a) aus der Gruppe 3-Amino-1,2-propandiol, 3-Amino-2-propanol, 4-Amino-3-butanol, 5-Amino-4-pentanol, 6-Amino-5-hexanol, Glucosamin, Aminophenol, Aminonaphthol und 3-Amino-1,2-butandiol ausgewählt ist.

9. Indikator nach einem der Ansprüche 1 bis 8, wobei der Farbstoff aus der Gruppe Lauth's Violett, Azure B, Azure C, Methylenblau, Thioninblau, Neomethylenblau, Brilliantalizarinblau, Indigo, Indigocarmin, Bromindigo R und Acid Red ausgewählt ist.

## Revendications

1. Indicateur d'oxygène comprenant
(a) au moins un composé organique ayant 3 atomes de carbone ou plus et contenant au moins un groupe amine primaire et au moins un groupe hydroxy, et
(b) au moins un colorant sélectionné dans le groupe consistant en colorants de thiazine, colorants indigo et leurs mélanges.

2. Indicateur de la revendication 1 où l'indicateur contient de plus au moins un acide organique ou inorganique.

3. Indicateur de la revendication 2 où le composé organique et l'acide organique ou l'acide inorganique sont chimiquement liés l'un à l'autre.

4. Indicateur selon l'une quelconque des revendications 1 à 3 où l'indicateur est imprimé sur un substrat.

5. Indicateur selon l'une quelconque des revendications 1 à 3 où l'indicateur est sous la forme d'un comprimé.

6. Indicateur selon l'une quelconque des revendications 1 à 5 où le composé (a) est sélectionné dans le groupe consistant en 3-amino-1,2-propanediol, 3-amino-1-propanol, 3-amino-2-propanol, 4-amino-3-butanol, 4-amino-1-butanol, 5-amino-4-pentanol, 5-amino-1-pentanol, 6-amino-5-hexanol, 6-amino-1-hexanol, glucosamine, aminophénol, aminonaphtol, et 4-amino-1,2-butanediol.

7. Indicateur selon l'une quelconque des revendications 1 à 5 où le composé (a) est le composé dans lequel un atome de carbone ayant l'amine primaire est adjacent à un atome de carbone ayant le groupe hydroxy.

8. Indicateur de la revendication 7 où le composé (a) est sélectionné dans le groupe consistant en 3-amino-1,2-propanediol, 3-amino-2-propanol, 4-amino-3-butanol, 5-amino-4-pentanol, 6-amino-5-hexanol, glucosamine, aminophénol, aminonaphtol et 3-amino-1,2-butanediol.

9. Indicateur selon l'une quelconque des revendications 1 à 8 où le colorant est sélectionné dans le groupe consistant en violet de Lauth, Azure B, Azure C, Bleu de Méthylène, Bleu de Thionine, Bleu de Néométhylène, Bleu Brillant Alisarine, Indigo, Indigocarmine, Bromo Indigo R et Rouge Acide.
